# FASCICULE DE BREVET EUROPEEN

(11) **EP 3 294 613 B1**
(45) Date de publication et mention de la délivrance du brevet: **01.07.2020**
(21) Numéro de dépôt: 16726360.7
(22) Date de dépôt: 03.05.2016
(51) Int. Cl.: B62D 25/06, B60J 7/043

(54) **PAVILLON STRUCTUREL, ET VÉHICULE ÉQUIPÉ D'UN TEL PAVILLON**
STRUKTURDACH UND FAHRZEUG MIT SOLCH EINEM DACH
STRUCTURAL ROOF AND VEHICLE PROVIDED WITH SUCH A ROOF

(30) Priorité: 12.05.2015 FR 1554267
(43) Date de publication de la demande: 21.03.2018
(73) Titulaire: Renault S.A.S., 92100 Boulogne-Billancourt (FR)
(72) Inventeur: HEWAK, Gregor, 95490 Vaureal (FR); POTIER, Jean Francois, 91120 Palaiseau (FR)
(86) Numéro de dépôt international: PCT/FR2016/051043
(87) Numéro de publication internationale: WO 2016/181056

(56) Documents cités:
- EP-A1- 2 154 015
- JP-A- 2006 327 257
- US-A1- 2010 038 933
- US-A1- 2013 268 163

## Description

La présente invention se rapporte de manière générale au domaine de l'automobile, et concerne plus précisément un pavillon structurel, ainsi qu'un véhicule équipé d'un tel pavillon.

Dans la plupart des véhicules automobiles, la caisse est constituée d'une superstructure formant une cellule de protection des occupants et d'un soubassement sur lequel sont rapportés des éléments de la chaine de traction, tels un moteur et un mécanisme d'entraînement des roues.

La partie supérieure de la superstructure se compose traditionnellement d'un pavillon de toit réalisé à partir d'une tôle d'acier.

Afin de réaliser un habitacle baigné d'une luminosité accrue, la partie supérieure de la superstructure peut être réalisée en partie en matériau translucide, comme cela est le cas pour un véhicule équipé d'un toit ouvrant en verre ou d'un toit panoramique en verre, comme cela est décrit dans le document EP2154015-A1.

Afin d'améliorer encore plus la luminosité, la partie translucide se doit d'être une surface élevée. Dans ce but, il est connu des véhicules ayant un toit panoramique en verre dont la caisse est dépourvue d'une traverse centrale de liaison des pieds milieu.

Afin de ne pas dégrader la tenue à l'effort de la caisse en cas de choc, la superstructure est calibrée de telle sorte que les côtés de caisse du véhicule comprennent des brancards latéraux de toit, formé par un assemblage d'une doublure de brancard et d'une structure de brancard.

Un tel assemblage forme une poutre de section fermée qui est reliée en son extrémité avant à une structure d'encadrement de baie composée en partie d'un montant de baie et d'une traverse avant de pavillon, en son extrémité arrière à une traverse arrière de pavillon.

Contrairement au pavillon de toit réalisé à partir d'une tôle d'acier, la structure de caisse d'un véhicule pourvu d'un toit panoramique en verre est dépourvue d'une traverse centrale permettant de mettre en liaison mécanique les brancards de toit. La répartition des efforts d'un choc au reste de la superstructure passe ainsi par une conception modifiée des autres traverses de toit, que sont les traverses avant et arrière de pavillon mais aussi une augmentation de la section des brancards latéraux de toit.

Les bords latéraux du pavillon sont ainsi bornés par les brancards de sorte que la partie translucide du pavillon est assujettie à la dimension des brancards.

Chaque brancard est recouvert par l'extérieur d'un côté de caisse, qui peut être assimilé à une pièce de carrosserie rendue visible de l'extérieur du véhicule, et qui recouvre en partie d'autres éléments de structure tels que par exemple le pied milieu et la doublure de custode arrière. Une telle architecture ne présente pas une finesse d'aspect du fait de la nature différente des matériaux utilisés à la fabrication du pavillon transparent et du côté de caisse. Le contraste provoqué par un côté de caisse réalisé à partir d'une tôle d'acier et recouvrant un brancard de toit est rendu fortement visible de l'extérieur du véhicule du fait de son agencement entre des vitres latérales et un pavillon transparent du type vitré.

En outre, un autre inconvénient réside dans l'aspect règlementaire qui, selon le pays concerné interdit tout recours à un matériau autre que l'acier pour former une partie de pavillon située sensiblement verticalement au droit des occupants du véhicule.

Un des buts de l'invention est de remédier en partie à ces inconvénients afin d'améliorer la luminosité dans l'habitacle tout en masquant partiellement la géométrie du brancard.

Pour ce faire, l'objet de l'invention a trait à un véhicule de type d'une automobile, comprenant une structure de caisse définissant un encadrement de toit formé par des traverses avant et arrière de pavillon mutuellement reliées l'une à l'autre au moyen de brancards latéraux, le véhicule comprenant un pavillon structurel comportant un cadre de transfert d'efforts destiné à coopérer avec un encadrement de toit délimitant une partie supérieure du véhicule, et un panneau translucide apte à être rapporté sur le cadre de transfert d'efforts préalablement assemblé à la caisse du véhicule afin de recouvrir au moins le cadre, le cadre de transfert d'efforts comprend une pièce avant de liaison reliée à une pièce arrière de liaison par des barres longitudinales, lesdites pièces avant et arrière de liaison étant conformées afin de coopérer avec des traverses avant et arrière de l'encadrement de toit de telle manière que chaque brancard latéral est associé à un brancard déporté formé par une barre longitudinale. Selon l'invention, le panneau translucide comprend au moins une ouverture longitudinale conformée afin de coopérer par complémentarité de forme avec une barre longitudinale, au jeu près d'assemblage chaque ouverture étant une lumière longitudinale réalisée au travers du panneau structurel et par laquelle est insérée l'une des barres longitudinales qui s'étend ainsi verticalement en saillie en dehors du pavillon.

Selon l'invention, le véhicule peut comprendre l'une quelconque des caractéristiques suivantes, prises séparément ou en combinaison entre elles :
- chaque barre longitudinale peut être une poutre de rigidification de section ouverte obtenue par emboutissage d'une plaque d'acier utilisée à la fabrication du cadre de transfert d'efforts ;
- chaque barre longitudinale peut être une poutre de rigidification obtenue par un moulage d'un matériau composite ;
- chaque barre longitudinale peut être une poutre de rigidification réalisée en aluminium ;
- chaque poutre de rigidification est sensiblement de section en U inversé, dont chacune des parois latérales comporte au moins une nervure de rigidification ;
- le panneau translucide comporte au moins une zone opaque permettant de masquer des parties du cadre et/ou la structure de caisse du véhicule ;
- les zones opaques sont situées sensiblement en vis-à-vis des pièces avant et arrière de liaison lorsque le panneau translucide est assemblé au cadre ;
- chaque poutre de rigidification définit un logement conformé afin de recevoir un accessoire du type étant par exemple d'un éclairage intérieur ou d'un diffuseur d'air.

L'invention concerne également un procédé d'assemblage d'un pavillon structurel sur une structure de caisse d'un véhicule, le véhicule étant conforme à l'une quelconque des caractéristiques susmentionnées, la structure de caisse ayant été préalablement réalisée afin de former un encadrement de toit délimité par des traverses avant et arrière reliées entre elles par des brancards latéraux, ledit procédé d'assemblage comportant une étape de fabrication d'un cadre de transfert d'efforts, une étape d'assemblage du cadre sur l'encadrement de toit, puis une étape de positionnement et d'assemblage du panneau translucide sur le cadre réalisant en concomitance l'assemblage du panneau translucide à l'encadrement de toit par collage de manière à positionner chaque barre longitudinale verticalement en saillie hors du pavillon translucide.

Bien entendu, d'autres caractéristiques et avantages apparaîtront à la lecture des modes de réalisation décrits en référence aux figures, donnés à titre d'exemples non limitatifs, dans lesquelles :
- la **figure 1** représente de manière schématique et selon une vue en perspective de l'extérieur, une partie supérieure d'un véhicule automobile comportant le pavillon structurel de l'invention,
- la **figure 2** représente de manière schématique et selon une vue en perspective, le pavillon structurel de la figure 1, selon l'invention,
- la **figure 3** représente de manière schématique et selon une vue en perspective éclatée le pavillon structurel de la figure 2, selon l'invention,
- la **figure 4** est un agrandissement d'une partie du véhicule, selon une coupe transversale, représentant l'agencement des éléments constitutifs du pavillon structurel sur certains des éléments de la caisse du véhicule, selon l'invention.

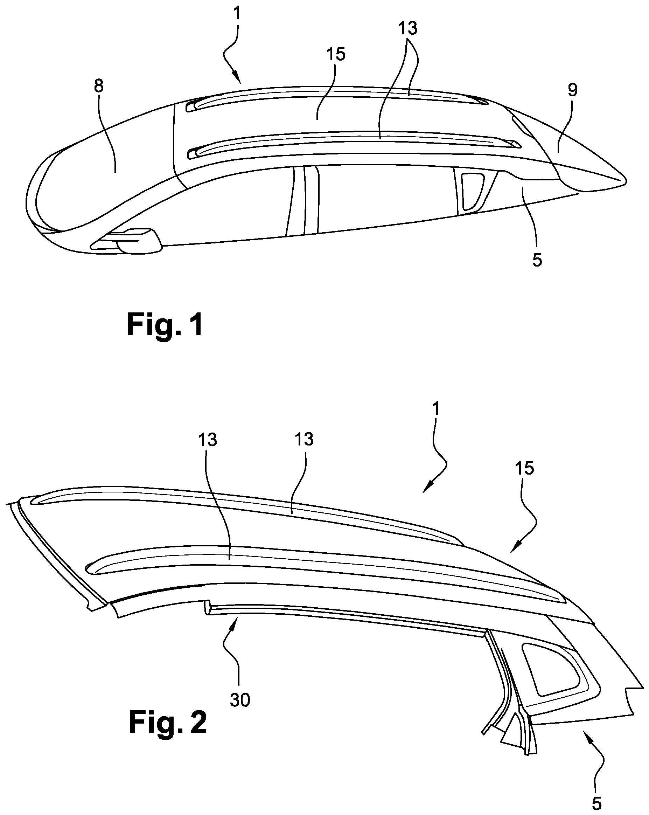

La description des figures 1 à 4 contient les termes « avant », « arrière », « latéraux » qui sont données selon un sens d'avancement normal du véhicule. En outre, l'axe longitudinal au véhicule est l'axe X qui relie l'avant à l'arrière du véhicule, l'axe transversal au véhicule est l'axe Y qui relie les côtés latéraux l'un à l'autre et l'axe vertical au véhicule est nommé l'axe Z dans ce qui suit.

Sur la figure 1 est représenté, de manière schématique la partie supérieure d'un véhicule, du type d'une automobile, qui se distingue par un pare-brise 8 séparé d'une lunette arrière 9 par un pavillon 1 structurel en ce sens que le pavillon a pour fonction de rigidifier la structure de caisse. Par voie de conséquence, un pavillon structurel permet de créer d'autres voies de transmission d'efforts de sorte que la partie supérieure de la structure de caisse peut être de conception améliorée en termes d'allègement du poids.

Le pavillon 1 structurel comprend en outre un panneau 15 translucide qui s'étend directement entre le pare-brise 8 et la lunette arrière 9 selon un assemblage du type à affleurement de telle sorte que l'ensemble forme une continuité de ligne longitudinale.

Comme on peut le voir sur la figure 1, le bord latéral gauche du pavillon structurel recouvre la partie supérieure de structure de caisse du véhicule de sorte que le panneau 15 translucide s'étend également à affleurement des vitres latérales gauche et d'un côté de caisse 5 délimitant un encadrement de custode arrière, par leur bord supérieur. Il en va de même pour le côté latéral droit, non visible sur la figure 1, de sorte que du fait de la symétrie des côtés gauche et droit par rapport à un plan médian d'axes X et Z, le panneau 15 comprend des bords latéraux tombant coopérant avec des éléments de vitrage latéraux, qu'ils soient de porte ou de structure fixe comme une vitre de custode.

Le panneau 15 translucide, une fois rapporté sur la partie supérieure de structure de caisse, vient à coopération par ses bords latéraux avant et arrière avec respectivement le pare-brise 8 et la lunette arrière 9.

Du fait de la proximité du panneau 15 translucide avec les vitres latérales d'ouvrant et de custode arrière, et la lunette arrière 9, la luminosité à l'intérieur de l'habitacle du véhicule est accrue.

Les voies de transmission d'efforts définies par ledit pavillon 1 structurel sont réalisées par des barres 13 longitudinales qui s'étendent linéairement au travers du panneau 15 translucide, en saillie progressivement hors du panneau 15 selon l'axe Z.

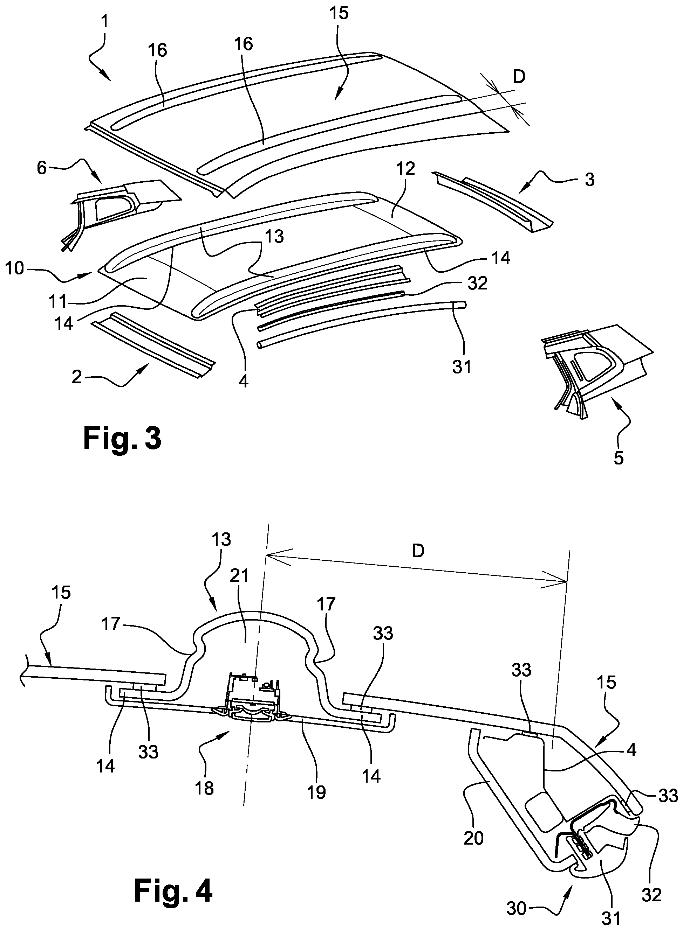

Les parties d'extrémité avant et arrière de chacune des barres 13 longitudinales sont solidaires des pièces 11 avant et 12 arrière, visibles sur la figure 3, de telle sorte que l'ensemble ainsi formé des barres 13 longitudinales et des pièces avant et arrière 11, 12 définissent un cadre 10 de transfert d'efforts destiné à coopérer avec l'encadrement de toit délimitant une partie supérieure du véhicule.

Le cadre 10 de transfert d'efforts est monté sur la structure de caisse du véhicule délimitant l'encadrement de toit. Par voie de conséquence, les barres 13 longitudinales participent à la rigidification de la structure de caisse, plus particulièrement à la rigidification de l'encadrement de toit.

Avant l'assemblage du pavillon 1 structurel sur la structure de caisse du véhicule, l'encadrement supérieur de caisse est formé par des traverses avant 2 et arrière 3 de pavillon mutuellement reliées l'une à l'autre au moyen des brancards 4 latéraux.

Comme cela est rendu visible sur la figure 4, les barres 13 longitudinales s'étendent sensiblement de manière parallèle auxdits brancards 4 latéraux mais avec un retrait D des barres 13 longitudinales déportées vers l'intérieur du véhicule, de sorte que les barres 13 longitudinale peuvent être qualifiées de brancards déportés.

Dans ce qui suit le terme employé pour chaque barre 13 longitudinale sera aussi celui de brancard déporté, en comparaison du brancard 4 latéral qui délimite le côté latéral d'un encadrement de toit.

Selon des plans médians d'axes X et Z à un brancard 4 latéral et à une barre 13 longitudinale, l'écart en Y entre ces deux plans médians est d'une distance D comme cela est rendu visible à la figure 4.

Selon un mode de réalisation, du fait de la distance D, chacune des barres longitudinales 13 forme un brancard déporté qui est destiné à s'étendre perpendiculairement au droit des sièges latéraux du véhicule. Ainsi la tête du conducteur d'un des sièges gauche ou droit du véhicule est protégée de l'extérieur par la présence du brancard déporté. Il en va de même des occupants prenant place sur des sièges avant et arrière jouxtant directement un encadrement de porte.

Lorsque le panneau 15 translucide est assemblé à la fois aux barres 13 longitudinale et aux brancards 4 latéraux, le panneau 15 translucide réalise une liaison entre l'une des barres 13 longitudinales et le brancard 4 latéral qui lui est proche. Dans cette partie de liaison du panneau 15 translucide, la lumière de l'extérieur peut rentrer afin d'être diffuser à l'intérieur de l'habitacle du véhicule.

Les brancards déportés assurent à l'identique des brancards latéraux, une liaison avec la traverse 2 supérieure de pare-brise 8, les doublures de custode arrière 5 et 6 et la traverse 3 arrière. Pour ce faire, les pièces avant et arrière 11 et 12 du cadre 10 de transfert d'efforts sont conformées afin de coopérer en partie par complémentarité de forme avec respectivement les traverses avant 2 et arrière 3. Les pièces avant 11 et arrière 12 sont destinées à venir respectivement en appui contre les traverses avant 2 et arrière 3 d'encadrement de toit, avant une fixation définitive.

Après une opération de pré-assemblage du pavillon 1 structurel sur l'encadrement de toit, les pièces avant 11 et arrière 12 du cadre 10 coiffent respectivement les traverses avant 2 et arrière 3 par superposition d'axe vertical Z.

Selon un mode de réalisation préféré, le cadre 10 de transfert d'efforts est réalisé en acier selon des opérations de découpe et de mise en forme par emboutissage d'une plaque d'acier. A titre d'exemple, la plaque d'acier peut être à base d'acier à haute limite élastique.

A titre d'exemple encore, tout ou partie du cadre peut être réalisé en aluminium, voire selon un procédé de moulage d'un matériau composite.

Les pièces avant 11 et arrière 12 sont des plaques de tôle destinées à être assemblées par soudage ou collage aux traverses avant 2 et arrière 3.

Une fois le cadre 10 solidarisé de manière rigide à l'encadrement de toit, chaque brancard 4 latéral est ainsi associé à un brancard déporté formé par une barre 13 longitudinale de telle sorte que les efforts transitant longitudinalement le long de l'axe X, dans la partie supérieure de la structure de caisse, suivent deux voies de transfert d'efforts, à savoir une voie principale réalisée par les brancards latéraux 4 et une voie secondaire réalisée par les brancards déportés.

Il résulte de cette conception de l'ensemble des pièces de brancard, une optimisation de leur conception respective, notamment en ce qui concerne leur section, de sorte que chaque brancard latéral 4 a une section réduite comparativement aux solutions connues de l'art antérieur qui ne présentent qu'un seul brancard et pour lesquels le toit est seulement formé par un toit en tôle dépourvu de la moindre pièce de rigidification.

Avantageusement, la section des brancards latéraux 4 est assujettie à la section des barres longitudinales 13. A titre d'exemple, le brancard latéral 4 est sensiblement de forme en L avec des parties d'extrémités formant des brides de fixation qui sont destinées à la liaison avec le panneau 15, notamment par collage via des cordons 33 de colle visible sur la figure 4.

Le cadre 10 comprenant les pièces avant 11 et arrière 12 ainsi que les barres longitudinales 13, est du type d'un module apte à être rapporté d'un seul tenant sur l'encadrement de toit délimitant la partie supérieure de la structure de caisse du véhicule.

Le pavillon 1 structurel comprend un panneau 15 translucide pourvu d'ouvertures 16 au travers de chacune desquelles une barre 13 longitudinale est destinée à s'étendre lorsque le panneau 15 translucide coiffe par superposition le cadre 10, par le dessus.

Chaque ouverture 16 est une lumière longitudinale réalisée au travers du panneau 15 structurel et par laquelle est insérée l'une des barres longitudinale 13 qui s'étend ainsi verticalement en saillie hors du pavillon 15 translucide.

Chaque barre 13 longitudinale définit ainsi un profilé de fixation disposé en saillie verticale hors de la surface du panneau 15 translucide.

Dans le mode de réalisation préféré des figures 1, 2 et 4, les bords des ouvertures 16 s'étendent en vis-à-vis des flancs latéraux des barres 13 longitudinales de sorte que selon un axe Z, les barres 13 longitudinales ne présentent pas d'espacement de vide avec le panneau 15. Les ouvertures 16 sont ainsi conformées selon les barres 13 longitudinales qu'elles logent une fois le panneau 15 rapporté sur le cadre 10.

Chaque barre longitudinale 13 comporte des brides 14 latérales de fixation recevant sur une face externe un cordon 33 de colle permettant la fixation du panneau 15 par le dessus.

Chaque barre 13 longitudinale prolonge vers le haut la partie sommitale du panneau 15 translucide de sorte qu'il n'y a pas d'espace en Z entre le panneau 15 translucide et chaque barre 13 longitudinale.

Chaque barre longitudinale 13 peut coopérer avec une garniture intérieure 19, comme cela est représenté sur la figure 4, rapporté sur la face intérieure des brides 14 de fixation et fixé par exemple par collage ou encliquetage afin de rendre la liaison démontable.

La paroi formant la barre 13 longitudinale et la garniture 19 délimitent une enceinte 21 qui peut être destinée à recevoir au moins un accessoire 18. A titre d'exemple, un tel accessoire 18 peut être un élément lumineux permettant de créer une ambiance lumineuse à l'intérieur de l'habitacle, comme cela est rendu visible sur la figure 4.

Selon une variante de réalisation, un tel accessoire 18 peut aussi être du type d'un diffuseur d'air qui est relié à un système de ventilation et/ou de climatisation embarqué dans le véhicule.

Selon une autre variante de réalisation, un tel accessoire 18 cumule à la fois la fonction d'ambiance lumineuse et de confort thermique par la présence d'un guide lumière intégrant des sorties d'une rampe de diffusion d'air.

A ce titre, la garniture 19 peut comprendre au moins une ouverture au travers de laquelle la lumière ou l'air pulsé, ou les deux, peut être diffusé.

Selon une variante de réalisation du pavillon 1 structurel, la liaison entre la barre 13 longitudinale et les pièces avant 11 et arrière 12 du cadre 10, s'effectue via des platines non représentées de fixation de telle sorte que les matériaux choisis pour la fabrication des pièces 11 et 12 de liaison et pour la fabrication des barres 13 longitudinales et également pour les platines de fixation peuvent être différents, notamment dans un but de réduction du poids du pavillon 1 structurel.

Les platines de fixation peuvent ainsi être réalisées en acier de sorte qu'elles sont fixées par soudage aux pièces avant 11 et arrière 12 du cadre 10 selon une opération de soudage par points par exemple.

Selon une variante de réalisation, les platines de fixation peuvent être réalisées d'un seul tenant avec les barres 13 longitudinales.

Selon une variante de réalisation, les barres 13 longitudinales sont réalisées dans un matériau composite, par exemple en fibre de verre. La liaison entre chaque platine de fixation et une pièce avant 11 ou arrière 12 du cadre 10 peut être réalisée par l'intermédiaire d'un cordon de colle approprié.

Les pièces avant 11 et arrière 12 de carrosserie peuvent être réalisées en aluminium de sorte que leur liaison aux traverses avant 2 et arrière 3 s'effectue via une opération de soudo-brasage.

Préférentiellement, le panneau 15 translucide peut être réalisé à partir d'une matière plastique telle que par exemple du polycarbonate.

Comme cela est représenté sur les figures 3 et 4, chaque brancard 4 latéral est recouvert par le panneau 15 translucide, par l'extérieur de telle sorte que les bords latéraux du panneau 15 viennent respectivement en appui contre des parties des brancards 4 latéraux formant des brides de fixation. La liaison entre ces éléments s'effectue par des cordons 33 de colle.

La face intérieure du brancard 4 latéral reçoit une garniture 20 dédiée qui est maintenue par collage ou par encliquetage pour en assurer sa liaison démontable.

La partie inférieure du brancard 4 latéral coopère avec moyens d'étanchéité 30, formés ici par des joints à lèvres 31 et 32 emmanchés sur une bride de fixation dédiée et faisant saillie hors du brancard 4 latéral, vers le bas.

Du fait des bords tombant, le panneau 15 translucide s'étendant selon une courbure inclinée par rapport à un axe vertical. Sur la figure 4, une telle inclinaison est d'environ 45° par rapport à l'axe vertical.

Le côté latéral d'extrémité libre du bord tombant du panneau 15 translucide est disposé au prolongement d'un de ces joints 31 et 32 d'étanchéité.

Le panneau 15 translucide peut comprendre d'un masque opacifiant dont l'effet est de rendre invisible la structure de caisse de l'extérieur du véhicule. A titre d'exemple, des bandes adhésives dites bandes de personnalisation du véhicule peuvent être utilisées à cette fin. D'autres moyens peuvent néanmoins être envisagés, comme par exemple l'injection d'une matière différente dans le moule de fabrication du panneau 15 translucide.

Du fait que le panneau 15 translucide dudit pavillon 1 structurel s'étend directement au prolongement avant de la lunette arrière 9, ce dernier peut être utilisé en tant que partie d'une optique de freinage, communément nommé troisième feu stop, au travers de laquelle un signal lumineux peut passer pour être rendu visible de l'extérieur.

Chaque barre 13 longitudinale comprend sur ses flancs latéraux des rainures 17 de rigidification qui peut aussi être utilisées à des fins de fixation d'un accessoire de transport, telles que des barres transversales de portage non représentées.

## Revendications

1. Véhicule du type d'une automobile, comprenant une structure de caisse définissant un encadrement de toit formé par des traverses avant (2) et arrière (3) de pavillon mutuellement reliées l'une à l'autre au moyen de brancards latéraux (4), **caractérisé en ce qu'**il comprend un pavillon structurel (1) comportant un cadre (10) de transfert d'efforts destiné à coopérer avec l'encadrement de toit délimitant une partie supérieure du véhicule, et un panneau (15) translucide apte à être rapporté sur le cadre (10) de transfert d'efforts préalablement assemblé à la caisse du véhicule afin de recouvrir au moins le cadre (10), et **en ce que** le cadre (10) de transfert d'efforts comprend une pièce (11) avant de liaison reliée à une pièce (12) arrière de liaison par des barres (13) longitudinales, lesdites pièces avant et arrière (11, 12) de liaison étant conformées afin de coopérer avec des traverses avant et arrière (2, 3) de l'encadrement de toit de telle manière que chaque brancard (4) latéral est associé à un brancard déporté formé par une barre (13) longitudinale, le panneau translucide (15) comprend au moins une ouverture (16) longitudinale conformée afin de coopérer par complémentarité de forme avec une barre (13) longitudinale, au jeu près d'assemblage, chaque ouverture (16) étant une lumière longitudinale réalisée au travers du panneau (15) structurel et par laquelle est insérée l'une des barres longitudinale (13) qui s'étend ainsi verticalement en saillie hors du pavillon (15) translucide.

2. Véhicule selon la revendication 1, **caractérisé en ce que** chaque barre (13) longitudinale est une poutre de rigidification de section ouverte obtenue par emboutissage d'une plaque d'acier utilisée à la fabrication du cadre (10) de transfert d'efforts.

3. Véhicule selon la revendication 2, **caractérisé en ce que** chaque poutre de rigidification est sensiblement de section en U inversé, dont chacune des parois latérales comporte au moins une nervure (17) de rigidification.

4. Véhicule selon l'une quelconque des revendications 2 à 3, **caractérisé en ce que** le panneau (15) translucide comporte au moins une zone opaque permettant de masquer des parties du cadre (10) et/ou la structure de caisse du véhicule.

5. Véhicule selon la revendication 4, **caractérisé en ce que** les zones opaques sont situées sensiblement en vis-à-vis des pièces avant et arrière (11, 12) de liaison lorsque le panneau (15) translucide est assemblé au cadre (10).

6. Véhicule selon l'une quelconque des revendications 1 à 5, **caractérisé en ce que** chaque poutre de rigidification définit un logement conformé afin de recevoir un accessoire (18) du type étant par exemple d'un éclairage intérieur ou d'un diffuseur d'air.

7. Procédé d'assemblage d'un pavillon structurel (1) sur une structure de caisse d'un véhicule conforme à l'une quelconque des revendications 1 à 6, la structure de caisse ayant été préalablement réalisée afin de former un encadrement de toit délimité par des traverses avant et arrière (2, 3) reliées entre elles par des brancards latéraux (4), ledit procédé d'assemblage comportant une étape de fabrication d'un cadre (10) de transfert d'efforts, une étape d'assemblage du cadre (10) sur l'encadrement de toit, puis une étape de positionnement et d'assemblage du panneau (15) translucide sur le cadre (10) réalisant en concomitance l'assemblage du panneau (15) translucide à l'encadrement de toit par collage de manière à positionner chaque barre longitudinale (13) verticalement en saillie hors du pavillon (15) translucide.

## Patentansprüche

1. Fahrzeug von der Art eines Kraftfahrzeugs, das eine Karosseriestruktur umfasst, die eine Dacheinfassung definiert, die aus vorderen (2) und hinteren (3) Dachquerträgern gebildet ist, die wechselseitig über seitliche Längsträger (4) miteinander verbunden sind, **dadurch gekennzeichnet, dass** es ein strukturelles Dach (1) umfasst, das einen Kraftübertragungsrahmen (10) beinhaltet, der dazu bestimmt ist, mit der Dacheinfassung zusammenzuwirken, die einen oberen Teil des Fahrzeugs begrenzt, und eine transluzente Platte (15), die geeignet ist, auf den zuvor an der Karosserie des Fahrzeugs montierten Kraftübertragungsrahmen (10) aufgesetzt zu werden, um mindestens den Rahmen (10) zu bedecken, und dadurch, dass der Kraftübertragungsrahmen (10) ein vorderes Verbindungsstück (11) umfasst, das mit einem hinteren Verbindungsstück (12) über Längsstäbe (13) verbunden ist, wobei die vorderen und hinteren Verbindungsstücke (11, 12) dazu ausgebildet sind, mit vorderen und hinteren Querträgern (2, 3) der Dacheinfassung derart zusammenzuwirken, dass jeder seitliche Längsträger (4) einem abgesetzten Längsträger zugeordnet ist, der durch einen Längsstab (13) gebildet ist, die transluzente Platte (15) mindestens eine Längsöffnung (16) umfasst, die dazu ausgebildet ist, bis auf das Montagespiel formschlüssig mit einem Längsstab (13) zusammenzuwirken, wobei jede Öffnung (16) ein Längsschlitz ist, der durch die strukturelle Platte (15) hindurch ausgeführt ist und durch den einer der Längsstäbe (13) eingesetzt ist, der sich somit von dem transluzenten Dach (15) vertikal abstehend erstreckt.

2. Fahrzeug nach Anspruch 1, **dadurch gekennzeichnet, dass** jeder Längsstab (13) ein Aussteifungsträger mit offenem Querschnitt ist, der durch Tiefziehen einer Stahltafel erhalten wird, die bei der Fertigung des Kraftübertragungsrahmens (10) verwendet wird.

3. Fahrzeug nach Anspruch 2, **dadurch gekennzeichnet, dass** jeder Aussteifungsträger im Wesentlichen den Querschnitt eines umgekehrten U hat, bei dem jede der Seitenwände mindestens eine Aussteifungssicke (17) beinhaltet.

4. Fahrzeug nach einem der Ansprüche 2 bis 3, **dadurch gekennzeichnet, dass** die transluzente Platte (15) mindestens einen undurchsichtigen Bereich beinhaltet, der es ermöglicht, Teile des Rahmens (10) und/oder die Karosseriestruktur des Fahrzeugs zu verblenden.

5. Fahrzeug nach Anspruch 4, **dadurch gekennzeichnet, dass** die undurchsichtigen Teile im Wesentlichen gegenüber den vorderen und hinteren Verbindungsstücken (11, 12) gelegen sind, wenn die transluzente Platte (15) am Rahmen (10) montiert ist.

6. Fahrzeug nach einem der Ansprüche 1 bis 5, **dadurch gekennzeichnet, dass** jeder Aussteifungsträger eine Aufnahme definiert, die dazu ausgebildet ist, ein Zubehörteil (18) beispielsweise von der Art einer Innenbeleuchtung oder eines Luftauslasses aufzunehmen.

7. Verfahren zur Montage eines strukturellen Dachs (1) an einer Karosseriestruktur eines Fahrzeugs nach einem der Ansprüche 1 bis 6, wobei die Karosseriestruktur zuvor so ausgeführt worden ist, dass sie eine Dacheinfassung bildet, die durch vordere und hintere Querträger (2, 3) begrenzt wird, die durch Längsträger (4) untereinander verbunden sind, wobei das Montageverfahren einen Schritt der Fertigung eines Kraftübertragungsrahmens (10), einen Schritt der Montage des Rahmens (10) an der Dacheinfassung, dann einen Schritt der Positionierung und Montage der transluzenten Platte (15) an dem Rahmen (10) bei gleichzeitiger Ausführung der Montage der transluzenten Platte (15) an der Dacheinfassung durch Kleben beinhaltet, so dass jeder Längsstab (13) aus dem transluzenten Dach (15) heraus vertikal abstehend positioniert ist.

## Claims

1. Motor car vehicle including a body structure defining a roof frame formed by front and rear roof cross members (2, 3) that are linked together using side rails (4), **characterized in that** it includes a structural roof (1) including a force-transfer frame (10) that is designed to engage with the roof frame delimiting an upper portion of the vehicle and a translucent panel (15) that can be attached to the force-transfer frame (10) previously assembled on the vehicle body in order to cover at least the frame (10), and **in that** the force-transfer frame (10) includes a front linking part (11) connected to a rear linking part (12) by longitudinal bars (13), said front and rear linking parts (11, 12) being shaped so as to engage with front and rear cross members (2, 3) of the roof frame so that each side rail (4) is associated with an offset side rail made up of a longitudinal bar (13), the translucent panel (15) has at least one longitudinal aperture (16) that has a matching shape designed to engage with a longitudinal bar (13), within assembly clearances, each aperture (16) being a longitudinal light formed through the structural panel (15) and via which one of the longitudinal bars (13) is inserted that thus extends vertically and projects out of the translucent roof (15).

2. Vehicle according to Claim 1, **characterized in that** each longitudinal bar (13) is an open-section stiffening beam obtained by stamping a steel plate used in the manufacture of the force-transfer frame (10).

3. Vehicle according to Claim 2, **characterized in that** each stiffening beam has a substantially U-shaped section, in which each of the side walls has at least one stiffening rib (17).

4. Vehicle according to either of Claims 2 and 3, **characterized in that** the translucent panel (15) has at least one opaque zone designed to mask the portions of the frame (10) and/or the body structure of the vehicle.

5. Vehicle according to Claim 4, **characterized in that** the opaque zones are arranged substantially opposite the front and rear linking parts (11, 12) when the translucent panel (15) is assembled with the frame (10).

6. Vehicle according to any one of Claims 1 to 5, **characterized in that** each stiffening beam forms a seat shaped to receive an accessory (18) such as an internal light or an air diffuser.

7. Assembly method for a structural roof (1) on a body structure of a vehicle in accordance with any one of Claims 1 to 6, the body structure having been made in advance in order to form a roof frame delimited by front and rear cross members (2, 3) that are linked together by side rails (4), said assembly method including a manufacturing step for a force-transfer frame (10), an assembly step for the frame (10) on the roof frame, then a positioning and assembly step of the translucent panel (15) on the frame (10), while concurrently assembling the translucent panel (15) on the roof frame by gluing so as to position each longitudinal bar (13) vertically projecting out of the translucent roof (15).
